# EUROPÄISCHE PATENTSCHRIFT

(11) **EP 1 754 732 B1**
(45) Veröffentlichungstag und Bekanntmachung des Hinweises auf die Patenterteilung: **15.04.2009**
(21) Anmeldenummer: 05107445.8
(22) Anmeldetag: 12.08.2005
(51) Int. Cl.: C08G 18/77, C08G 18/42, C08G 18/10

(54) **Primerzusammensetzung**
Primer composition
Composition de primage

(43) Veröffentlichungstag der Anmeldung: 21.02.2007
(73) Patentinhaber: Sika Technology AG, 6340 Baar (CH)
(72) Erfinder: Külling, Annemarie, 8197 Rafz (CH); Goeldi, Michael, 8400, Winterthur (CH)
(74) Vertreter: Isler, Jörg

(56) Entgegenhaltungen:
- EP-A- 0 171 434
- WO-A-00/00530
- WO-A-96/06124
- DE-A1- 1 597 515
- US-A- 4 643 794
- US-A1- 2003 084 995
- DATABASE WPI Week 1989 Derwent Publications Ltd., London, GB; AN 1989-359967 XP002351062 & JP 01 268777 A (NIPPON STEEL CORP) 26. Oktober 1989 (1989-10-26)

## Beschreibung

### Technisches Gebiet

Die vorliegende Erfindung betrifft das Gebiet der Primerzusammensetzungen.

### Stand der Technik

Kleben ist eine breit eingesetzte Verbindungstechnologie. Aufgrund der grossen Anzahl von möglichen Substraten welche miteinander verklebt werden gibt es immer wieder Substrate, welche mit gewissen Klebstoffen keine oder ungenügende Haftung aufbauen können. Um die Haftung von Klebstoffen und Dichtstoffen auf diesen Untergründen zu verbessern, wurden schon länger spezifische Primer eingesetzt.

Kunststoffe und lackierte Untergründe sind für die industrielle Fertigung sehr wichtige Untergründe. Aufgrund der unterschiedlichen Art von Lacken sind insbesondere lackierte Oberflächen ein derartiger Untergrund, welcher bekanntermassen schwierig zu verkleben ist. Besonders kritisch sind die neueren Generationen von Automobillacken in Kombination mit einkomponentigen Polyurethankleb- oder Dichtstoffen.

Es wurde deshalb angestrebt, Vorbehandlungsverfahren zu entwickeln um die Haftung auf Lacken zu erhöhen. So offenbaren US 4,857,366 einen Voranstrich für Lacke enthaltend p-Toluolsulfonsäure und WO-A-99/31191 eine Lösung einer mit Hydrocarbyl substituierten aromatischen Sulfonsäure in Alkylalkohol, oder einem aromatischen oder alkylaromatischen Lösungsmittel, welche zu einer Verbesserung der Lackhaftung führen sollen.

Andererseits offenbart WO-A-2004/033519 Primerzusammensetzungen, welche ein Polyurethanprepolymer sowie ein Katalysatorsystem enthalten, welches aus einer Bismutverbindung sowie einer aromatischen Stickstoffverbindung erhältlich sind, und zu einer starke Verbesserung der Lackhaftung führen. US-A-2003/0084995 offenbart eine Primerzusammensetzung, welche ein Harz sowie eine Polyisocyanat, einen Katalysator sowie ein Lösungsmittel umfasst. Als Harz und Polyisocyanat wird eine Reihe von möglichen Substanzen erwähnt. Es wird weiterhin offenbart, dass eine derartige Zusammensetzung als Primer für Kunststoffe wie PVC, Polyurethanen, Polyolefine, Polystyrole und EPDM eingesetzt werden kann.

### Darstellung der Erfindung

Aufgabe der vorliegenden Erfindung ist es, einen neuen Primer zur Verfügung zu stellen, welcher die Haftung von Polyurethankleb- und Dichtstoffen auf Kunstoffen und Lacken, insbesondere auf Lacken, stark verbessert.

Überraschenderweise hat sich gezeigt, dass sehr spezifische Primerzusammensetzungen gemäss Anspruch 1 eine starke Verbesserung der Haftung von Polyurethanklebstoffen auf Lacken und Kunststoffen ergeben.

### Wege zur Ausführung der Erfindung

Die vorliegende Erfindung betrifft Primerzusammensetzungen, welche ein Isocyanatgruppen aufweisendes spezifisches Bindemittel enthalten.

Dieses spezifische Bindemittel wird hergestellt aus einer Mischung eines amorphen und bei Raumtemperatur festen und mindestens eine OH-Gruppe aufweisendes Polyesterharzes **A**, sowie aus mindestens einem Polyisocyanat **B** der Formel (I)

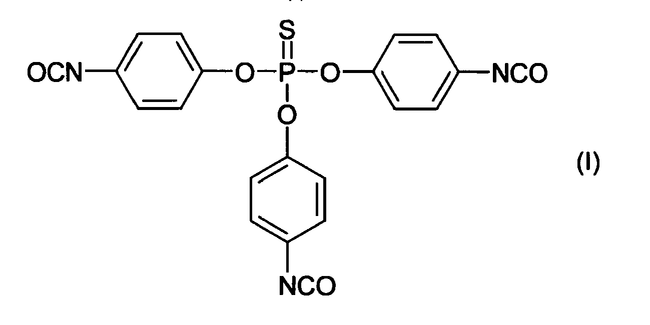

Das Polyisocyanat **B** der Formel (I) wird auch als Tris(p-Isocyanatophenyl)thiophosphat bezeichnet. Bevorzugt wird es als Lösung in einem Lösungsmittel, insbesondere in einem Ester, eingesetzt. Als besonders bevorzugte Form gilt es in der Form, wie es als Desmodur® RFE von Bayer kommerziell erhältlich ist. Desmodur® RFE ist gemäss Angaben von Bayer eine 27 %-ige Lösung von Tris(p-Isocyanatophenyl)thiophosphat in Ethylacetat.

Das Verhältnis von festem Polyesterharz **A** und Polyisocyanat **B** wird hierbei in einem Verhältnis eingesetzt werden, dass das stöchiometrische Verhältnis der NCO-Gruppen zu demjenigen der OH-Gruppen im Bereich zwischen 50:1 und 100:1 liegt und/oder das Gewichtsverhältnis von Polyesterharz **A** zu Polyisocyanat **B** einen Wert zwischen 1.6 und 0.75, insbesondere zwischen 1.2 und 0.8, aufweist. Insbesondere liegt das stöchiometrische Verhältnis der NCO-Gruppen zu demjenigen der OH-Gruppen im Bereich zwischen 50:1 und 100:1 und das Gewichtsverhältnis von Polyesterharz **A** zu Polyisocyanat **B** weist einen Wert zwischen 1.6 und 0.75, insbesondere zwischen 1.2 und 0.8, auf.

Insbesondere beträgt das Gewichtsverhältnis von Polyesterharz **A** zu Polyisocyanat **B** in etwa 1:1.

Das Polyesterharz **A** weist mindestens eine, bevorzugt mindestens zwei, OH-Gruppen auf, ist amorph und ist bei Raumtemperatur fest. Es weist einen Schmelzpunkt (Melt flow) von mehr als 140°C, insbesondere zwischen 150 und 160 °C, gemessen durch die Ring & Kugel- (Ring & ball-) Methode, auf. Andererseits weist das Polyesterharz **A** bei 25°C eine Shore-D Härte von vorzugsweise zwischen 70 und 85, insbesondere zwischen 75 und 85, bevorzugt zwischen 77 und 82, auf.

Das Polyesterharz **A** geeignet sind insbesondere aus mindestens einer Dicarbonsäure und mindestens einem Glykol hergestellt. Das Polyesterharz **A** weist bevorzugt eine Molekulargewicht von über 12'0000 g/mol, insbesondere zwischen 15'000 und 40'000 g/mol auf. Weiterhin bevorzugt weist das Polyesterharz **A** eine OH-Zahl zwischen 2 und 9, insbesondere zwischen 3 und 6, mg KOH/g auf. Das Polyesterharz ist weiterhin bevorzugt ein aromatisches Polyesterharz.

Das Polyesterharz **A** weist typischerweise die folgende Struktur der Formel (II) auf

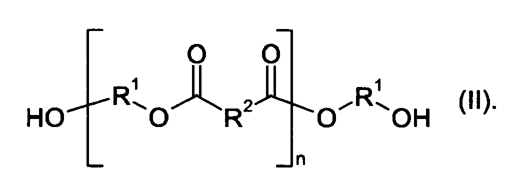

Die Reste R¹ und R² stellen hierbei unabhängig voneinander divalente organische Reste dar und n gibt die Anzahl Repetiereinheiten an.

Insbesondere bevorzugte Polyesterharze **A** sind diejenigen, welche unter der 2000-er Reihe des Produktereihe Vitel® von Bostik verkauft werden. Insbesondere sind dies Vitel® 2100, Vitel® 2180, Vitel® 2190, Vitel® 2000, Vitel® 2200, Vitel® 2300 und Vitel® 2700. Als besonderes bevorzugt gilt Vitel® 2200, beziehungsweise Vitel® 2200B.

Zur Herstellung des Isocyanatgruppen aufweisenden Bindemittels werden mindestens das Polyisocyanat **B** der Formel (I) und das mindestens eine OH-Gruppe aufweisende Polyesterharz **A** gemischt. Die Mischung erfolgt derart, dass das stöchiometrische Verhältnis der NCO-Gruppen zu demjenigen der OH-Gruppen im Bereich zwischen 50:1 und 100:1 liegt und/oder das Gewichtsverhältnis von Polyesterharz **A** zu Polyisocyanat **B** einen Wert zwischen 1.2 und 0.8 beträgt.

Somit kann davon ausgegangen werden, dass im Wesentlichen ein Addukt von zwei Molekülen Polyisocyanat **B** mit einem Molekül des Polyesterharzes **A** hergestellt wird, und somit ein Addukt der Formel (III) mit vier freien Isocyanatgruppen aufweist

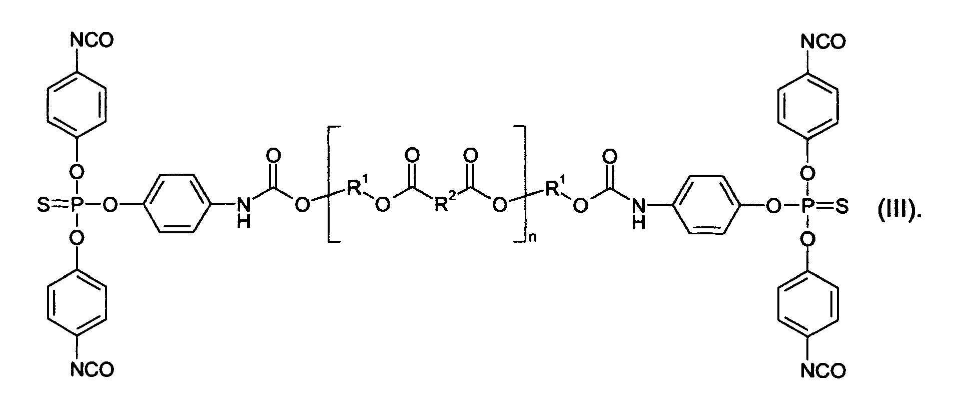

Die Herstellung erfolgt vorzugsweise, indem das mindestens eine Polyisocyanat **B** vorgelegt wird und hierzu das mindestens eine Polyesterharz, bevorzugt in einem organischen Lösungsmittel gelöst, unter Rühren und unter Inertgasatmosphäre zugegeben. Zum allfälligen Einsatz für das Lösen des Polyesterharz **A** geeignete organische Lösungsmittel sind insbesondere Ketone oder Ester zu nennen. Bevorzugt ist Methylethylketon ("MEK") oder Ethylacetat.

In einer Ausführungsform umfasst die Primerzusammensetzung mindestens ein organisches Lösungsmittel. Als bevorzugtes Lösungsmittel gelten Ketone oder Ester, insbesondere Ester, bevorzugt Ethylacetat.

In einer weiteren Ausführungsform umfasst die Primerzusammensetzung mindestens zwei organische Lösungsmittel. Besonders bevorzugt sind Ester als das eine Lösungsmittel und Ketone als zweites Lösungsmittel. Insbesondere handelt es sich um Ethylacetat beim einen Lösungsmittel und um ein Keton, bevorzugt Methylethylketon, um das andere Lösungsmittel.

Es ist bevorzugt, dass der Anteil des Bindemittel, welches hergestellt wird aus einer Mischung des Polyesterharzes **A** und aus mindestens einem Polyisocyanat **B,** 10 bis 50 Gew.-%, insbesondere 15 bis 30 Gew.-%, bezogen auf das Gewicht der Primerzusammensetzung beträgt.

In einer bevorzugten Ausführungsform wird ein Anteil des Polyisocyanats **B** stöchiometrisch durch mindestens ein Polyisocyanat **B'** und/oder durch mindestens ein Polyisocyanat **B"** und/oder durch mindestens ein Polyisocyanat **B"'** ersetzt. Es ist hierbei wichtig, dass dies lediglich ein Teil des Polyisocyanats **B** ersetzt wird, und es sich deshalb nicht um einen Vollersatz des Polyisocyanats **B** handelt. Das Polyisocyanat **B'** ist ein Isocyanurat von Hexamethylendiisocyanat (HDI) ist, das Polyisocyanat **B"** ist ein aromatisches Polyisocyanat auf Basis von Toluylendiisocyanat (TDI) und das Polyisocyanat **B"'** ist ein oligomeres Polyisocyanat von 1,6-Hexamethylendiisocyanat (HDI), Diphenylmethandiisocyanat (MDI), Isophorondiisocyanat (IPDI) und/oder Toluylendiisocyanat (TDI) oder Polymethylen Polyphenylisocyanat, insbesondere sogenanntes Roh-MDI. Bevorzugt handelt es sich hierbei um Polyisocyanate **B'** und **B",** wie sie unter dem Namen Desmodur® L 75 und Desmodur® **N** 3300 kommerziell von Bayer vertrieben werden. Bevorzugt handelt es sich beim Polyisocyanate **B''',** um oligomere Polyisocyanate, wie sie unter dem Namen Vestanat® T 1890 von Degussa oder Vorante® M580 kommerziell von Dow vertrieben werden.

Falls neben **B** auch noch **B'** und/oder **B"** und/oder **B"'** als Polyisocyanat für die Herstellung des Isocyanat-Gruppen aufweisenden Bindemittels verwendet werden, ist es vorteilhaft, wenn Polyisocyanat B mehr als 50 Gew.-% der Gewichtssumme von **B, B', B"** und **B"'** beträgt.

Falls neben **B** auch noch **B'** und/oder **B"** und/oder **B"'** als Polyisocyanat für die Herstellung des Isocyanat-Gruppen aufweisenden Bindemittels verwendet werden, ist es vorteilhaft, wenn das Gewichtsverhältnis von Polyesterharz **A** zur Gewichtssumme von **B, B', B"** und **B"'** einen Wert zwischen 1.6 und 0.75, insbesondere zwischen 1.2 und 0.8, aufweist.

In einer bevorzugten Ausführungsform umfasst die Primerzusammensetzung mindestens Russ als Füllstoff. Es ist bevorzugt, dass die Primerzusammensetzung Russ in einer Menge von 1 bis 20 Gew.-%, insbesondere von 2 bis 15 Gew.-%, bezogen auf das Gewicht der Primerzusammensetzung vorliegt.

Es kann durchaus vorteilhaft sein, dass in der Primerzusammensetzung weiterhin noch Polyisocyanate vorhanden sind, wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethylcyclohexan (=Isophorondiisocyanat oder IPDI), Perhydro-2,4'- und -4,4'-die-phenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethylxylylendiisocyanat (TMXDI), 1,3- und 1,4-Bis-(isocyanatomethyl)-cyclohexan, 2,4- und 2,6-Toluylendiisocyanat (TDI) und beliebige Gemische dieser Isomeren, 4,4'-, 2,4'- und 2,2'-Diphenylmethandiisocyanat (MDI) und beliebige Gemische dieser Isomeren, 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), 1-Isocyanato-3,3,5-trimethyl-5-isocyanatomethylcyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI); 1,4-Tetramethylendiisocyanat, 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, 1,3- und 1,4-Bis-(isocyanatomethyl)-cyclohexan (BIC), m- und p-Xylylendiisocyanat (m- und p-XDI), 1,3,5-Tris-(isocyanatomethyl)-benzol oder Bis-(1-Isocyanato-1-methylethyl)-naphthalin.

Die Primerzusammensetzung kann weitere Bestandteile umfassen, wie Katalysatoren, Thixotropiermittel, Dispergiermittel, Netzmittel, Korrosionsinhibitoren, Haftvermittler, insbesondere Alkoxysilane und Titanate, UV- und Hitzestabilisatoren, Pigmente, Farbstoffe und UV-Indikatoren.

Als Katalysatoren sind beispielsweise Zinnkatalysatoren, Bismutkatalysatoren und Aminkatalysatoren geeignet.

Als Zinnkatalysatoren gelten insbesondere Organozinnverbindungen wie Dibutylzinndilaurat, Dibutylzinndiacetylacetonat, Dibutylzinndiacetat, Dioctylzinndicarboxylat, Mono- oder Dibutylzinnthioester, und Dibutylzinndichlorid.

Als Bismutkatalysatoren gelten insbesondere Bismutcarboxylate, insbesondere Bismuttricarboxylate sowie Bismutkatalysatorsysteme, die aus Bismutverbindungen und einer aromatischen Stickstoffverbindung erhältlich sind und in WO-A-2004/033519 sind. Als besonders hierfür geeignete aromatische Stickstoffverbindung ist 8-Hydroxychinolin.

Die Primerzusammensetzung zeichnen sich dadurch aus, dass sie zu einer Verbesserung der Haftung von Klebstoffen oder Dichtstoffen auf Kunststoffen und lackierten Oberflächen führen und deshalb als Primer eingesetzt werden können.

Besonders auf den Kunststoffen Acrylnitril-Butadien-Styrol-Copolymere (ABS), Polymethylmethacrylat (PMMA) und Polycarbonat konnte eine gute Haftung festgestellt werden.

Als lackierte Oberfläche sind insbesondere mit einem Lack beschichtete Substrate wie Glas, Holz, Metalle, Metall-Legierungen, Kunststoffe sowie mineralische Substrate wie Beton, Fels oder Bachstein zu verstehen.

Als besonders wichtiger Lack sind Lacke von Transportmittel, insbesondere Automobillacke zu nennen. Als wichtigster Lack sind Automobillacke der neueren Generation, insbesondere Mehrfacheinbrand-Lacke, zu nennen, bei denen bekannt ist, dass Klebstoffe, insbesondere einkomponentige feuchtigkeitshärtende Polyurethanklebstoffe oder -Dichtstoffe Anlass zu Haftproblemen führen können.

Weiterhin ist ein Gegenstand der vorliegenden Erfindung ein Verfahren zur Verklebung oder zum Abdichten. Von diesem Verfahren gibt es insbesondere in drei Varianten.

In einer ersten Variante umfasst es die Schritte
a) Applikation der Primerzusammensetzung auf ein zu verklebendes oder abzudichtendes Substrat erstes **S1**
b) Applikation eines Klebstoffes oder Dichtstoffes auf die abgelüftete Primerzusammensetzung, welche sich auf dem Substrat **S1** befindet
c) Kontaktieren des Klebstoffs oder Dichtstoffes mit einem zweiten Substrat **S2.**

In einer zweiten Variante umfasst es die Schritte
a') Applikation der Primerzusammensetzung auf ein zu verklebendes oder abzudichtendes erstes Substrat **S1**
b') Applikation eines Klebstoffes oder Dichtstoffes auf die Oberfläche eines zweiten Substrates **S2,** welche aus demselben oder unterschiedlichem Material wie das Substrat **S1** besteht,
c') Kontaktieren des Klebstoffes oder Dichtstoffes mit der abgelüfteten Primerzusammensetzung, welche sich auf dem Substrat **S1** befindet;

In der dritten Variante umfasst es die Schritte
a") Applikation der Primerzusammensetzung auf ein zu verklebendes oder abzudichtendes erstes Substrat **S1**
b") Ablüften der Primerzusammensetzung
c") Applikation eines Klebstoffes oder Dichtstoffes zwischen die Oberflächen des Substrates **S1** und **S2.**

In all diesen Varianten des Verfahrens kann das zweite Substrat **S2** aus demselben oder unterschiedlichem Material wie das erste Substrat **S1** bestehen.

Beim ersten Substrat **S1** handelt es sich vorzugsweise um einen Lack, insbesondere um ein lackiertes Metall. Als lackierte Oberfläche sind insbesondere mit einem Lack beschichtete Substarte wie Glas, Holz, Metalle, Metall-Legierungen, Kunststoffe sowie mineralische Substrate wie Beton, Fels oder Bachstein zu verstehen.

Als besonders wichtige Lacke sind Lacke von Transportmittel, insbesondere Automobillacke, insbesondere Automobildecklacke und KTL-Beschichtungen, zu nennen. Als wichtigste Lacke sind Automobillacke der neueren Generation, insbesondere Mehrfacheinbrand-Lacke, zu nennen, bei denen bekannt ist, dass Klebstoffe, insbesondere einkomponentige feuchtigkeitshärtende Polyurethanklebstoffe oder -Dichtstoffe Anlass zu Haftproblemen führen können.

Falls es sich beim zweiten Substrat **S2** um ein von **S1** verschiedenes Material handelt, handelt es sich beim Substrat **S2** insbesondere um Glas oder Keramik.

In einer weiteren Ausführungsform des Verfahrens schliesst sich bei den vorgängig erwähnten drei Verfahren anschliessend an den Schritt c) oder c') oder c") ein Schritt d) des Aushärtens des Klebstoffes oder Dichtstoffes an.

Je nach verwendetem Klebstoff oder Dichtstoff kann dieser Schritt sofort nach Schritt c) oder c') oder c") oder zeitverschoben erfolgen.

Es können diverse Klebstoffe oder Dichtstoffe verwendet werden. Je nach Verwendung und Einsatzort des verklebten oder abgedichteten Körpers kann dies ein Klebstoff oder Dichtstoff auf Epoxidharzbasis, auf Isocyanatbasis, auf (Meth)acrylaten oder auf Basis von Silanterminierten Polymeren ("STP"s) oder Silikonen sein. Es kann sich hierbei beispielsweise um Raumtemperatur härtende Kleb- oder Dichtstoffe, um Heissschmelzklebstoffe (so genannte "hotmelts"), um Dispersionskleb- oder Dichtstoffe oder haftklebstoffe (sogenannte "pressure sensitive adhesives") handeln.

Der Kleb- oder Dichtstoff kann einkomponentig oder mehrkomponentig sein. Bevorzugt ist der Kleb- oder Dichtstoff einkomponentig.

Insbesondere handelt es sich hierbei jedoch um einkomponentige Polyurethan-Klebstoffe oder -Dichtstoffe. Unter Polyurethan-Klebstoffen und Polyurethan-Dichtstoffen werden hier und im gesamten vorliegenden Dokument Kleb- und Dichtstoffe verstanden, welche Prepolymere enthalten, die freie Isocyanat- und/oder Alkoxysilangruppen umfassen und Urethan- und/oder Harnstoffgruppen aufweisen. Somit umfasst der Term "Polyurethan" sowohl die klassischen Polyurethane als auch die Silan-terminierten Polyurethanen, welche dem Fachmann auch unter dem Term "Silane Terminated Polyurethanes" ("SPUR") bekannt sind.

Neben Polyurethanen können auch Alkoxysilan-terminierte Polymere, wie sie dem Fachmann unter dem Begriff "MS-Polymere" bekannt sind, zum Einsatz in Kleb- oder Dichtstoffen kommen.

Bevorzugt ist der Kleb- oder Dichtstoff ein feuchtigkeitshärtender einkomponentiger Polyurethanklebstoff oder -dichtstoff. Als besonders bevorzugt ist es ein feuchtigkeitshärtender einkomponentiger Polyurethanklebstoff oder Polyurethan-Dichtstoff, insbesondere ein feuchtigkeitshärtender einkomponentiger Polyurethanklebstoff, wie sie beispielsweise als Sikaflex® bei Sika Schweiz AG kommerziell erhältlich sind.

Ein weiterer Gegenstand der vorliegenden Erfindung ist ein verklebter oder abgedichteter Artikel. Diese verklebten oder abgedichteten Artikel werden durch ein Verfahren, wie es soeben beschreiben wurde, erhalten.

Die so erhaltenen verklebten oder abgedichteten Artikel sind von vielfältiger Natur. Insbesondere sind diese aus dem Gebiet der industriellen Fertigung, bevorzugt sind sie Transportmittel, insbesondere Automobile. Sie können auch Anbauteile sein. Derartige Anbauteile sind insbesondere vorgefertigte Modulteile welche an der Fertigungslinie als Module verwendet werden und insbesondere an- oder eingeklebt werden. Bevorzugt werden diese vorgefertigten Anbauteile im Transportmittelbau eingesetzt.

Als Beispiele eines derartigen Anbauteils ist die Führerkabine von Lastkraftwagen oder von Lokomotiven oder Schiebedächern für Autos.

Es sind aber auch Anwendungen im Bau von Möbeln, weissen Waren, wie Waschmaschine, Gebäudeteilen wie Fassaden oder Fahrstühle, möglich.

### Beispiele

### Herstellung Primerzusammensetzungen

Gemäss den Mengen in Tabelle 1 wurden das Polyisocyanat im Lösungsmittel oder einem Teil davon vorgelegt und dann unter Rühren das Polyesterharz allenfalls gelöst im Rest des Lösungsmittel unter Stickstoff langsam unter Rühren zugetropft und während 1 Stunde während 30°C gerührt. Anschliessend wurde auf 40°C aufgeheizt und gerührt bis der NCO-Gehalt konstant ist. Hierzu wurden allenfalls vorhandene Lösungsmittel, Trocknungsmittel (p-Toluolsulfonylisocyanat "TI"), Katalysator (Dibutylzinndilaurat "DBTL") und Russ in ein dicht verschliessbare Blechdose gegeben, mit Glaskugeln versetzt, verschlossen und während 1 Stunde mit Hilfe einer Red Devil-Schüttelapparatur innig vermischt.

Nach der Vermischung wurden die Glaskugeln abgetrennt und die Primerzusammensetzung in einer dicht schliessenden Aluminiumflasche gefüllt. Das Beispiel ***REF-7*** ist lediglich Methylethylketon.

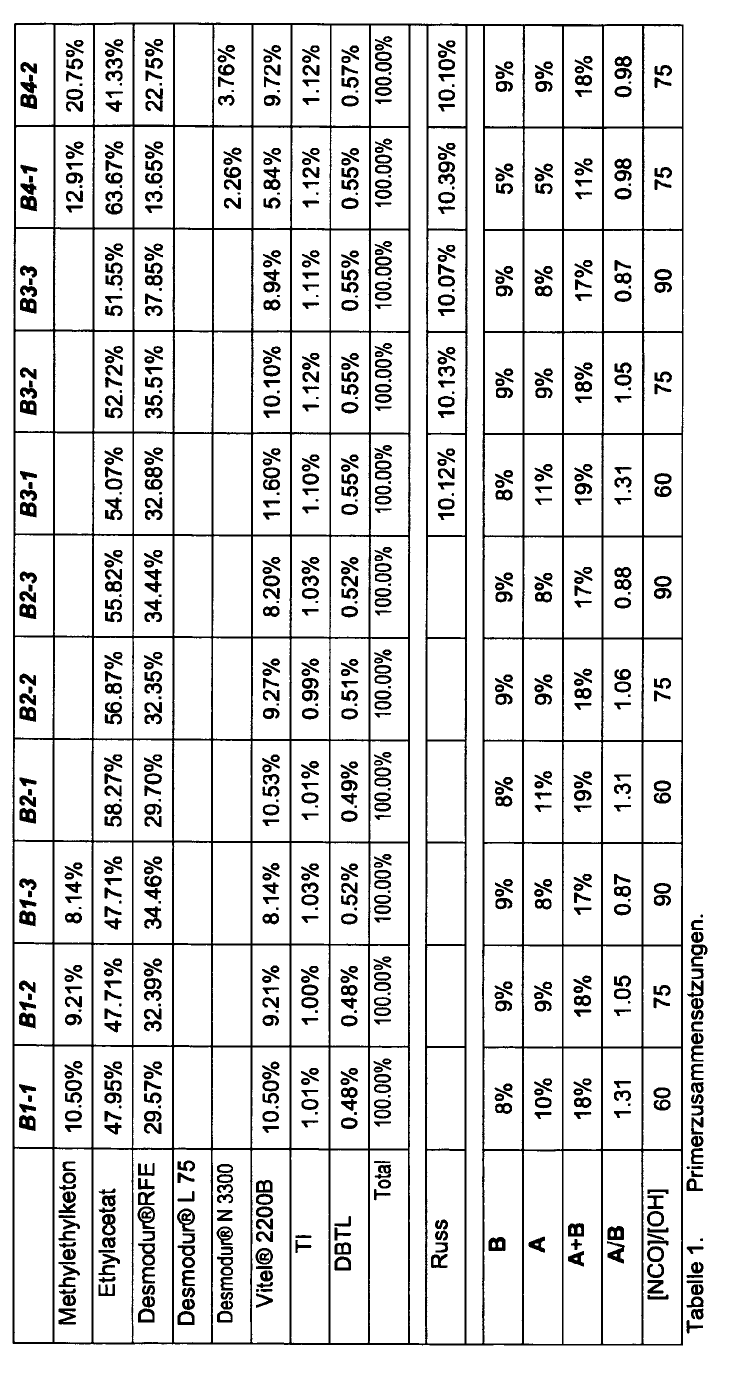

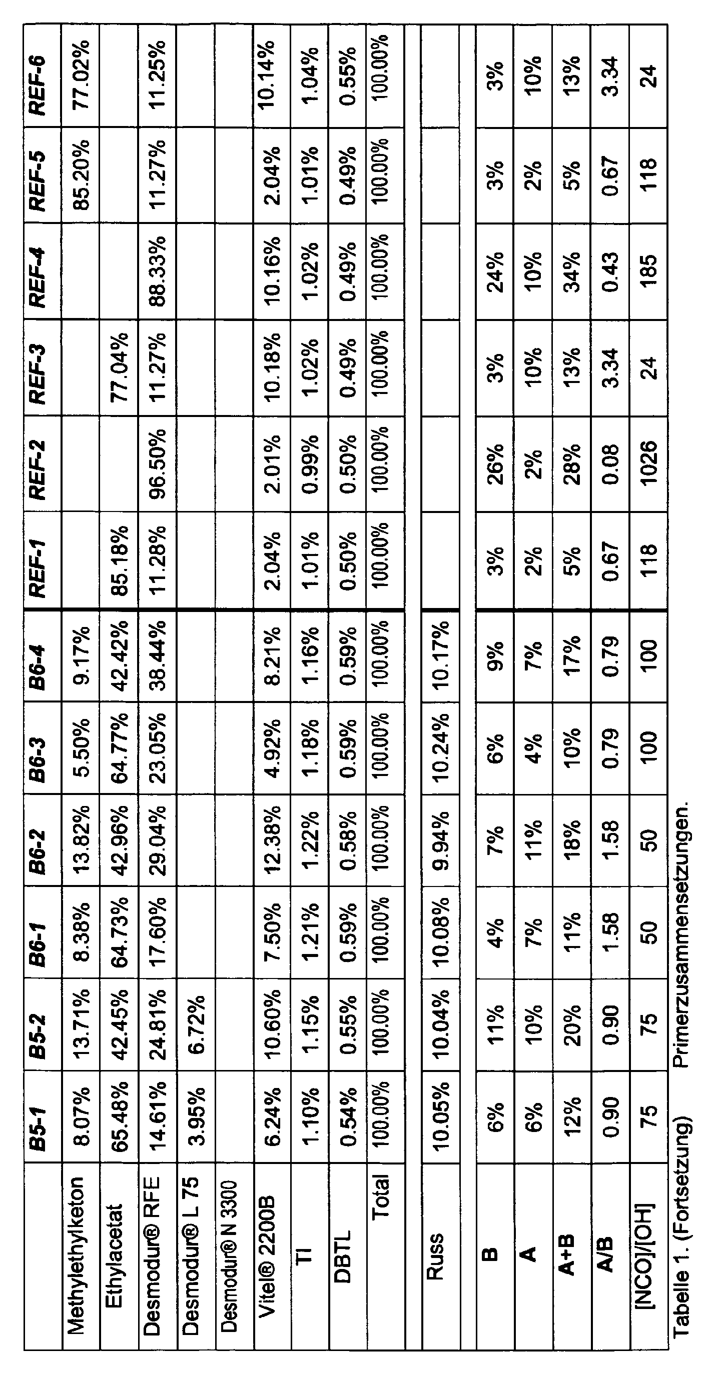

### Testverfahren

### Applikation und Aushärtung

Die Primerzusammensetzungen wurden jeweils auf verschiedene Automobillackbleche mittels eines Pinsels als Anstrich appliziert. Nach 30 Minuten Ablüftezeit wurde der hochmodulige Polyurethanklebstoff Sikaflex®-250 DM-2, beziehungsweise der niedermodulige Polyurethanklebstoff SikaTack®-Ultrafast (beide kommerziell erhältlich von Sika Schweiz AG), als Rundraupe mit einer Kartuschenpresse und einer Düse auf die geprimerte Lackoberfläche aufgetragen.

Anschliessend wurde der Klebstoff während 7 Tagen bei 23°C und 50% rel. Luftfeuchtigkeit (Raumtemperatur-Klimalagerung: "KL") ausgehärtet und ein Drittel der Raupe mittels unten beschriebenen Haftungstest getestet. Anschliessend wurde die Probe während weiteren 7 Tagen ins Wasser bei 23°C gelegt (Wasserlagerung: "WL"). Darauf hin wurde die Haftung durch den Raupentest für ein weiteres Drittel der Raupe getestet. Darauf hin wurde der Probekörper während weiteren 7 Tagen bei den Lacken einem Schwitzwasserklima von 100% rel. Luftfeuchtigkeit und 40°C ("SL") beziehungsweise bei den Kunststoffen einem Cataplasmaklima von 100% rel. Luftfeuchtigkeit und 70°C ("CL"), ausgesetzt und danach die Haftung des letzten Drittel der Raupe ermittelt.

### Lacke

Es wurden Bleche mit den folgenden Decklack verwendet:
- HDCT 4041 von PPG ("HDCT4041 ")
- RK 8046 von DuPont ("RK8046")
- RK4126 von DuPont ("RK4126")

Diese Lacke weisen ein ungenügendes Haftungsverhalten für einkomponentige Polyurethanklebstoffe ohne Primer Vorbehandlung auf.

### Haftungstest ("Raupentest")

Die Haftung des Klebstoffes wurde mittels 'Raupentest' getestet. Hierbei wird am Ende knapp über der Klebefläche eingeschnitten. Das eingeschnittene Ende der Raupe wird mit einer Rundzange Zange festgehalten und vom Untergrund gezogen. Dies geschieht durch vorsichtiges Aufrollen der Raupe auf die Zangenspitze, sowie Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = 0% Kohäsionsbruch (rein adhäsiver Bruch)
"P" in der Wertung bezeichnet eine Ablösung des Primers vom Untergrund.

Testresultate mit Kohäsionsbruchwerten von weniger als 75% gelten als ungenügend.

### Resultate

Die Haftresultate sind in den Tabellen 2 und 3 zusammengestellt. Es zeigt sich hier einerseits, dass die erfindungsgemässen Primerzusammensetzungen eine Verbesserung der Haftung auf kritischen Lacken stark verbessert wird. Anderseits sind beispielsweise aus dem Vergleich von ***B2-1, B2-2*** und ***B2-3*** mit ***B3-1, B3-2*** und ***B3-3*** auch der vorteilhafte Effekt von Russ als Formulierungszusatz in den Primerzusammensetzungen auf die Haftung ersichtlich.

Die Vergleichsbeispiele ***REF-1*** bis ***REF-6*** belegen weiterhin die Wichtigkeit des stöchiometrischen Verhältnis der NCO-Gruppen zu demjenigen der OH-Gruppen sowie des Gewichtsverhältnisses von Polyesterharz **A** zu Polyisocyanat **B** für die Erzielung von Haftung auf kritischen Lackuntergründen.

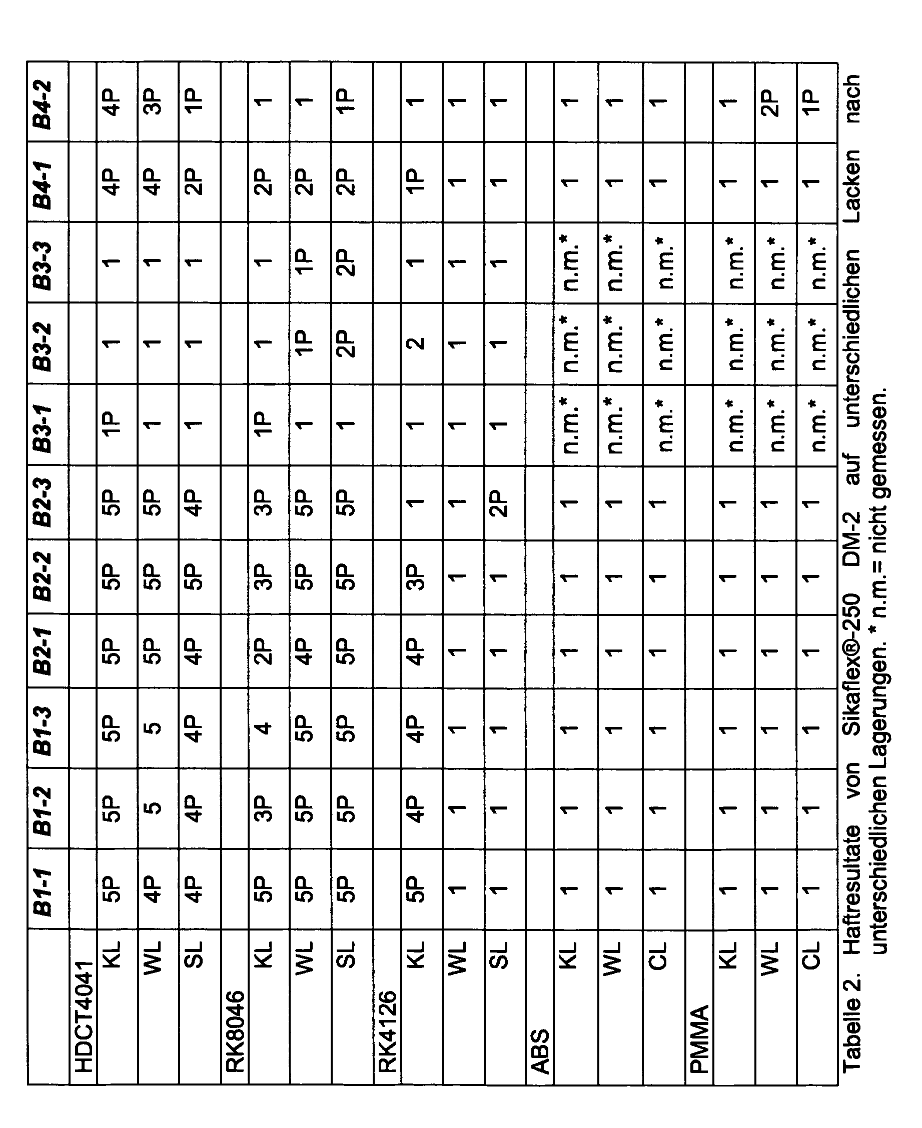

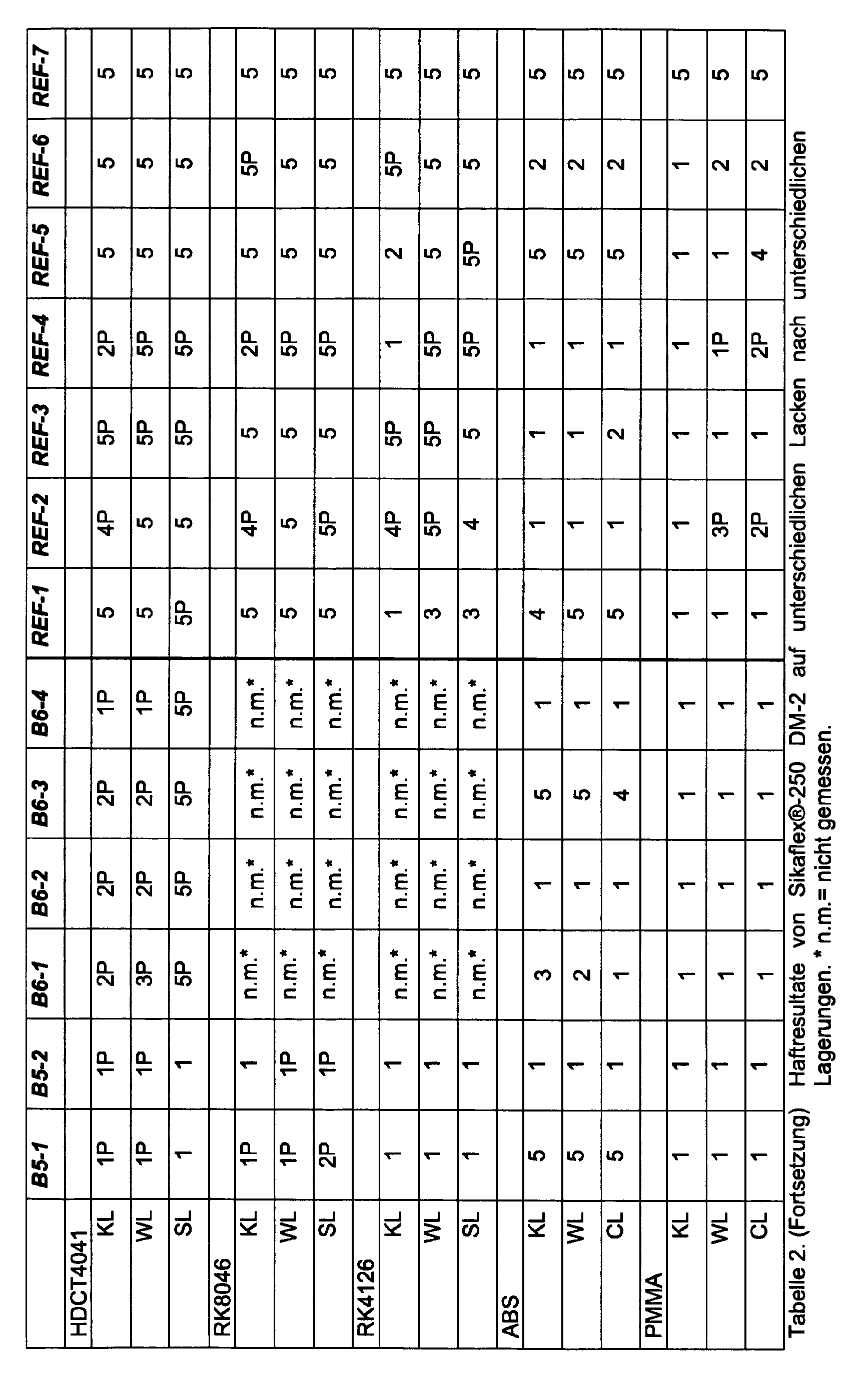

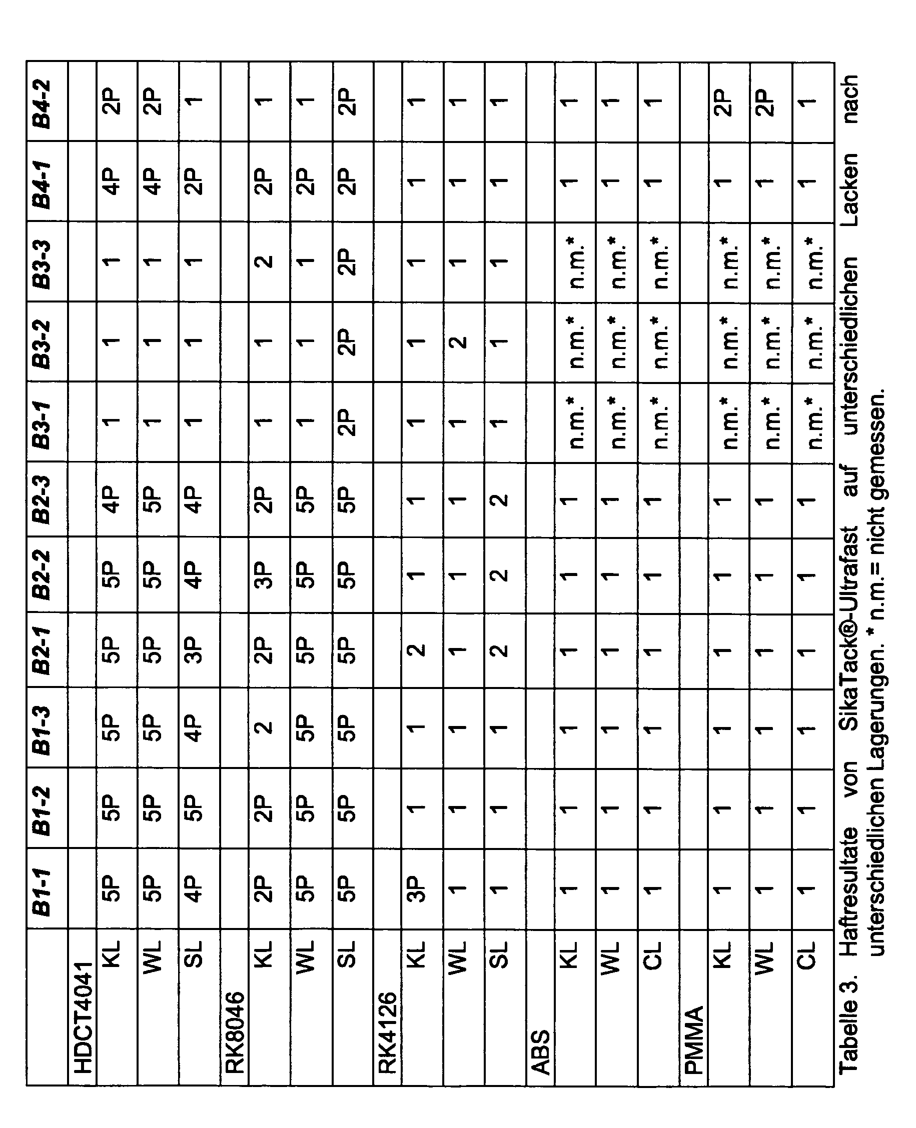

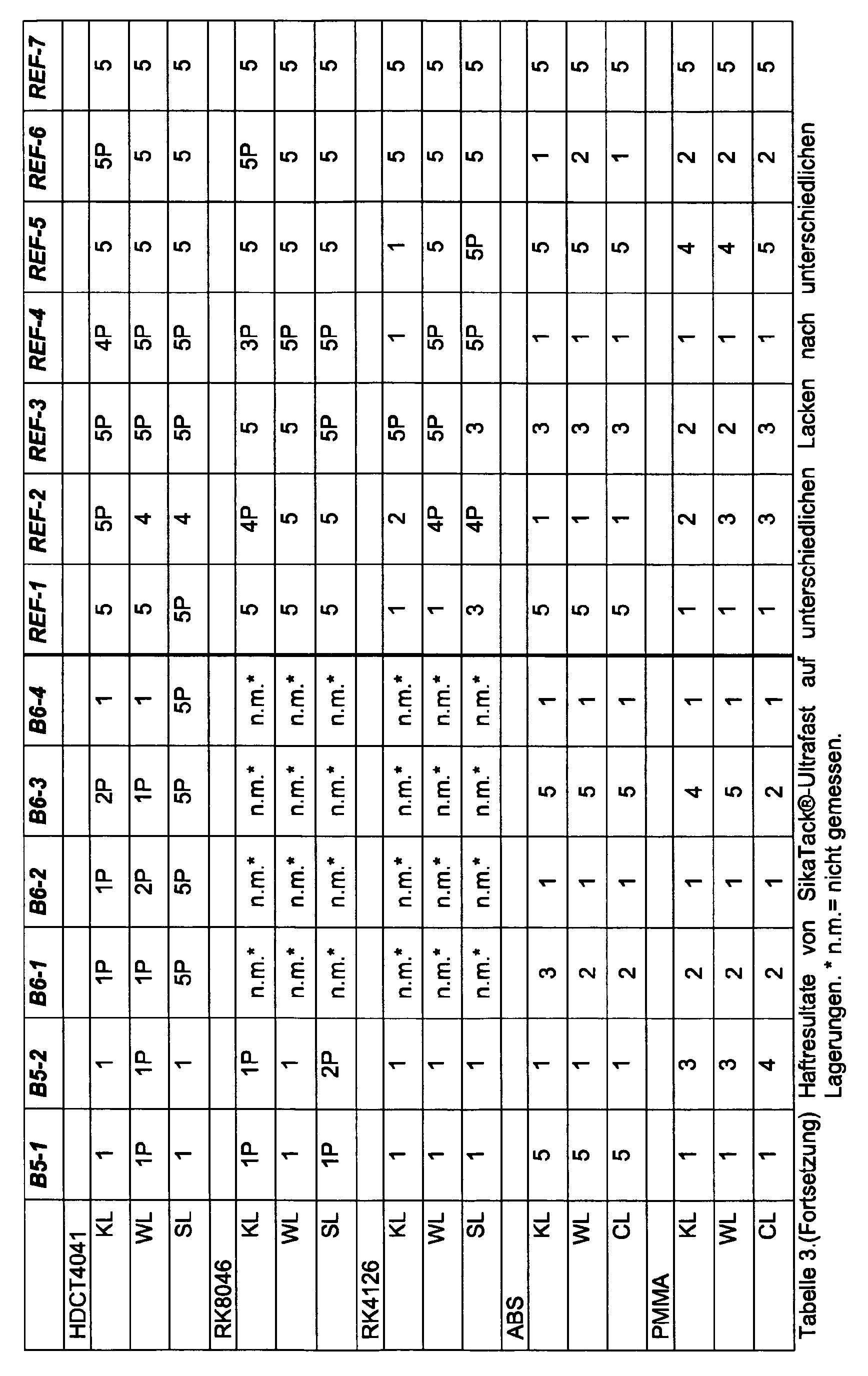

## Patentansprüche

1. Primerzusammensetzung umfassend
- mindestens ein Isocyanat-Gruppen aufweisendes Bindemittel, welches hergestellt wird aus einer Mischung eines amorphen und bei Raumtemperatur festen und mindestens eine OH-Gruppe aufweisendes Polyesterharz **A,** sowie aus mindestens einem Polyisocyanat **B** der Formel (I) 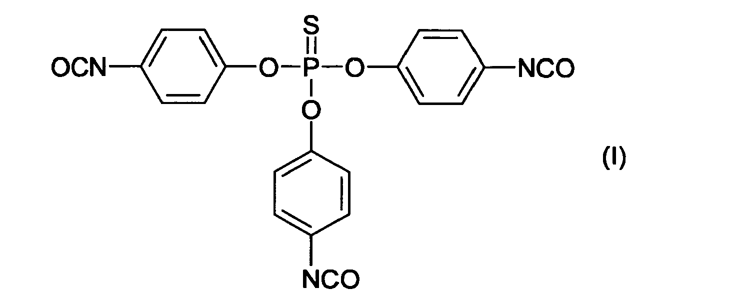
wobei das feste Polyesterharz **A** und das Polyisocyanat **B** in einem Verhältnis eingesetzt werden, dass das stöchiometrische Verhältnis der NCO-Gruppen zu demjenigen der OH-Gruppen im Bereich zwischen 50:1 und 100:1 liegt und/oder das Gewichtsverhältnis von Polyesterharz **A** zu Polyisocyanat **B** einen Wert zwischen 1.6 und 0.75, insbesondere zwischen 1.2 und 0.8, aufweist.

2. Primerzusammensetzung gemäss Anspruch 1, **dadurch gekennzeichnet, dass** das Polyesterharz **A** herstellbar ist aus mindestens einer Dicarbonsäure und mindestens einem Glykol.

3. Primerzusammensetzung gemäss Anspruch 1 oder 2, **dadurch gekennzeichnet, dass** das Polyesterharz **A** bei 25°C eine Shore D-Härte zwischen 70 und 85, insbesondere zwischen 77 und 82, aufweist.

4. Primerzusammensetzung gemäss einem der vorhergehenden Ansprüche, **dadurch gekennzeichnet, dass** das Polyesterharz **A** eine OH-Zahl zwischen 3 und 6 mg/KOH aufweist.

5. Primerzusammensetzung gemäss einem der vorhergehenden Ansprüche, **dadurch gekennzeichnet, dass** die Primerzusammensetzung weiterhin mindestens ein organisches Lösungsmittel, insbesondere ein Ester, bevorzugt Ethylacetat, umfasst.

6. Primerzusammensetzung gemäss Anspruch 5, **dadurch gekennzeichnet**, die Primerzusammensetzung mindestens zwei organische Lösungsmittel, insbesondere Ethylacetat und mindestens ein weiteres organisches Lösungsmittel, insbesondere ein Keton, bevorzugt Methylethylketon, umfasst.

7. Primerzusammensetzung gemäss einem der vorhergehenden Ansprüche, **dadurch gekennzeichnet, dass** die Primerzusammensetzung weiterhin mindestens einen Russ umfasst.

8. Primerzusammensetzung gemäss Anspruch 7, **dadurch gekennzeichnet, dass** die Menge des Russes 1 bis 20 Gew.-%, insbesondere von 2 bis 15 Gew.-%, bezogen auf das Gewicht der Primerzusammensetzung beträgt.

9. Primerzusammensetzung gemäss einem der vorhergehenden Ansprüche, **dadurch gekennzeichnet, dass** ein Anteil des Polyisocyanats **B** stöchiometrisch durch mindestens ein Polyisocyanat **B'** und/oder durch mindestens ein Polyisocyanat **B"** und/oder durch mindestens ein Polyisocyanat **B'''** ersetzt ist, wobei das Polyisocyanat **B'** ein Isocyanurat von Hexamethylendiisocyanat ist und das Polyisocyanat **B"** ein aromatisches Polyisocyanat auf Basis von Toluylendiisocyanat ist und das Polyisocyanat **B"'** ein oligomeres Polyisocyanat von 1,6-Hexamethylendiisocyanat (HDI), Diphenylmethandiisocyanat (MDI), Isophorondiisocyanat (IPDI) und/oder Toluylendiisocyanat (TDI) oder Polymethylen Polyphenylisocyanat, ist.

10. Primerzusammensetzung gemäss einem der vorhergehenden Ansprüche, **dadurch gekennzeichnet, dass** der Anteil des Bindemittels, welches hergestellt wird aus einer Mischung des Polyesterharzes **A** und aus mindestens einem Polyisocyanat **B,** 10 bis 50 Gew.-%, insbesondere 15 bis 30 Gew.-%, bezogen auf das Gewicht der Primerzusammensetzung beträgt.

11. Verwendung einer Primerzusammensetzung gemäss einem der Ansprüche 1 bis 10 als Primer zur Verbesserung der Haftung von Klebstoffen oder Dichtstoffen auf lackierten Oberflächen.

12. Verwendung einer Primerzusammensetzung gemäss einem der Ansprüche 1 bis 10 als Primer zur Verbesserung der Haftung von Klebstoffen oder Dichtstoffen auf Kunststoffen, insbesondere auf Acrylnitril-Butadien-Styrol-Copolymere (ABS) oder Polymethylmethacrylat (PMMA).

13. Verfahren zur Verklebung oder zum Abdichten umfassend die Schritte
a) Applikation einer Primerzusammensetzung gemäss einem der Ansprüche 1 bis 10 auf ein zu verklebendes oder abzudichtendes erstes Substrat **S1**
b) Applikation eines Klebstoffes oder Dichtstoffes auf die abgelüftete Primerzusammensetzung, welche sich auf dem Substrat **S1** befindet
c) Kontaktieren des Klebstoffs oder Dichtstoffes mit einem zweiten Substrat **S2;**
oder
a') Applikation einer Primerzusammensetzung gemäss einem der Ansprüche 1 bis 10 auf ein zu verklebendes oder abzudichtendes erstes Substrat **S1**
b') Applikation eines Klebstoffes oder Dichtstoffes auf die Oberfläche eines zweiten Substrates **S2,** welche aus demselben oder unterschiedlichem Material wie das Substrat **S1** besteht,
c') Kontaktieren des Klebstoffes oder Dichtstoffes mit der abgelüfteten Primerzusammensetzung, welche sich auf dem Substrat **S1** befindet;
oder
a") Applikation einer Primerzusammensetzung gemäss einem der Ansprüche 1 bis 10 auf ein zu verklebendes oder abzudichtendes erstes Substrat **S1**
b") Ablüften der Primerzusammensetzung
c") Applikation eines Klebstoffes oder Dichtstoffes zwischen die Oberflächen des Substrates **S1** und **S2,**
wobei das zweite Substrat **S2** aus demselben oder unterschiedlichem Material wie das erste Substrat **S1** besteht.

14. Verfahren gemäss Anspruch 13, **dadurch gekennzeichnet, dass** anschliessend an den Schritt c) oder c') oder c") ein Schritt d) des Aushärtens des Klebstoffes oder Dichtstoffes anschliesst.

15. Verfahren gemäss Anspruch 13 oder 14, **dadurch gekennzeichnet, dass** der Klebstoff oder Dichtstoff ein feuchtigkeitshärtender einkomponentiger Polyurethanklebstoff oder -dichtstoff ist.

16. Verfahren gemäss einem der Ansprüche 13 bis 15, **dadurch gekennzeichnet, dass** das Substrat **S1** ein Lack, insbesondere ein lackiertes Metall, ist.

17. Verklebter oder abgedichteter Artikel, welcher durch ein Verfahren gemäss einem der Ansprüche 13 bis 16 erhalten wurde.

18. Verklebter oder abgedichteter Artikel gemäss Anspruch 17, **dadurch gekennzeichnet, dass** der Artikel ein Transportmittel, insbesondere ein Automobil, oder ein Anbauteil eines Transportmittels, insbesondere eines Automobils, ist.

## Claims

1. Primer composition comprising
- at least one binder which contains isocyanate groups and is prepared from a mixture of an amorphous polyester resin **A** which is solid at room temperature and contains at least one OH group and of at least one polyisocyanate **B** of the formula (I), 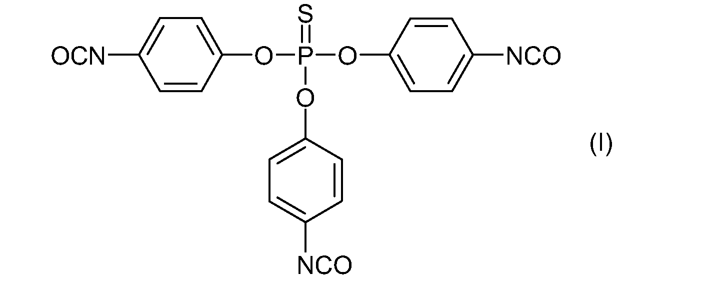
the solid polyester resin **A** and the polyisocyanate **B** being used in a ratio such that the stoichiometric ratio of the NCO groups to the OH groups is situated in the range between 50:1 and 100:1 and/or the weight ratio of polyester resin **A** to polyisocyanate **B** has a value of between 1.6 and 0.75, in particular between 1.2 and 0.8.

2. Primer composition according to Claim 1, **characterized in that** the polyester resin **A** is preparable from at least one dicarboxylic acid and at least one glycol.

3. Primer composition according to Claim 1 or 2, **characterized in that** the polyester resin **A** at 25°C has a Shore D hardness of between 70 and 85, in particular between 77 and 82.

4. Primer composition according to any one of the preceding claims, **characterized in that** the polyester resin **A** has an OH number of between 3 and 6 mg/KOH.

5. Primer composition according to any one of the preceding claims, **characterized in that** the primer composition further comprises at least one organic solvent, in particular an ester, preferably ethyl acetate.

6. Primer composition according to Claim 5, **characterized in that** the primer composition comprises at least two organic solvents, in particular ethyl acetate and at least one further organic solvent, in particular a ketone, preferably methyl ethyl ketone.

7. Primer composition according to any one of the preceding claims, **characterized in that** the primer composition further comprises at least one carbon black.

8. Primer composition according to Claim 7, **characterized in that** the amount of the carbon black is 1% to 20% by weight, in particular from 2% to 15% by weight, based on the weight of the primer composition.

9. Primer composition according to any one of the preceding claims, **characterized in that** a fraction of the polyisocyanate **B** is replaced stoichiometrically by at least one polyisocyanate **B'** and/or by at least one polyisocyanate **B"** and/or by at least one polyisocyanate **B''',** the polyisocyanate **B'** being an isocyanurate of hexamethylene diisocyanate and the polyisocyanate **B"** being an aromatic polyisocyanate based on tolylene diisocyanate and the polyisocyanate **B'''** being an oligomeric polyisocyanate of hexamethylene 1,6-diisocyanate (HDI), diphenylmethane diisocyanate (MDI), isophorone diisocyanate (IPDI) and/or tolylene diisocyanate (TDI) or polymethylene polyphenyl isocyanate.

10. Primer composition according to any one of the preceding claims, **characterized in that** the fraction of the binder which is prepared from a mixture of the polyester resin **A** and from at least one polyisocyanate **B** is 10% to 50% by weight, in particular 15% to 30% by weight, based on the weight of the primer composition.

11. Use of a primer composition according to any one of Claims 1 to 10 as a primer for promoting the adhesion of adhesives or sealants to painted surfaces.

12. Use of a primer composition according to any one of Claims 1 to 10 as a primer for promoting the adhesion of adhesives or sealants to plastics, in particular to acrylonitrile-butadiene-styrene copolymers (ABS) or polymethyl methacrylate (PMMA).

13. Method of adhesive bonding or of sealing, comprising the steps of
a) applying a primer composition according to any one of Claims 1 to 10 to a first substrate **S1** to be bonded or sealed
b) applying an adhesive or sealant to the flashed-off primer composition located on the substrate **S1**
c) contacting the adhesive or sealant with a second substrate **S2;**
or
a') applying a primer composition according to any one of Claims 1 to 10 to a first substrate **S1** to be bonded or sealed
b') applying an adhesive or sealant to the surface of a second substrate **S2,** composed of the same or different material as the substrate **S1,**
c') contacting the adhesive or sealant with the flashed-off primer composition which is located on the substrate **S1;**
or
a") applying a primer composition according to any one of Claims 1 to 10 to a first substrate **S1** to be bonded or sealed
b") flashing off the primer composition
c') applying an adhesive or sealant between the surfaces of the substrate **S1** and **S2,**
the second substrate **S2** being composed of the same or different material as the first substrate **S1.**

14. Method according to Claim 13, **characterized in that** step c) or c') or c") is followed by a step d) of curing the adhesive or sealant.

15. Method according to Claim 13 or 14, **characterized in that** the adhesive or sealant is a moisture-curing one-component polyurethane adhesive or sealant.

16. Method according to any one of Claims 13 to 15, **characterized in that** the substrate **S1** is a paint, in particular a painted metal.

17. Bonded or sealed article obtained by a method according to any one of Claims 13 to 16.

18. Bonded or sealed article according to Claim 17, **characterized in that** the article is a means of transport, in particular an automobile, or an externally mounted component of a means of transport, in particular of an automobile.

## Revendications

1. Composition de primage comprenant
- au moins un liant renfermant des groupes isocyanate, qui est préparé à partir d'un mélange d'une résine de polyester **A** solide à la température ambiante et renfermant au moins un groupe OH, ainsi que d'au moins un polyisocyanate **B** de formule (I) 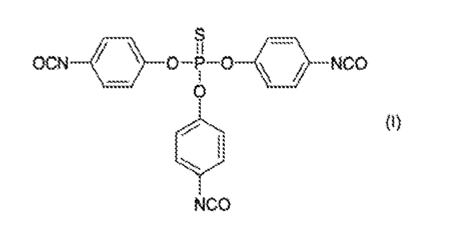
où la résine de polyester solide **A** et le polyisocyanate **B** sont utilisés en un rapport tel que la proportion stoechiométrique des groupes NCO sur celle des groupes OH soit comprise entre 50:1 et 100:1 et/ou le rapport pondéral entre la résine de polyester **A** et le polyisocyanate **B** présente une valeur comprise entre 1,6 et 0,75, en particulier entre 1,2 et 0,8.

2. Composition de primage selon la revendication 1, **caractérisée en ce que** la résine de polyester **A** peut être préparée à partir d'au moins un acide dicarboxylique et d'au moins un glycol.

3. Composition de primage selon la revendication 1 ou 2, **caractérisée en ce que** la résine de polyester **A** présente, à 25°C, une dureté Shore D comprise entre 70 et 85, en particulier entre 77 et 82.

4. Composition de primage selon l'une quelconque des revendications précédentes, **caractérisée en ce que** la résine de polyester **A** présente un indice d'OH compris entre 3 et 6 mg/KOH.

5. Composition de primage selon l'une quelconque des revendications précédentes, **caractérisée en ce que** la composition de primage comprend en outre au moins un solvant organique, en particulier un ester, de préférence l'acétate d'éthyle.

6. Composition de primage selon la revendication 5, **caractérisée en ce que** la composition de primage comprend au moins deux solvants organiques, en particulier l'acétate d'éthyle et au moins un solvant organique supplémentaire, en particulier une cétone, de préférence la méthyléthylcétone.

7. Composition de primage selon l'une quelconque des revendications précédentes, **caractérisée en ce que** la composition de primage comprend en outre un noir de carbone.

8. Composition de primage selon la revendication 7, **caractérisée en ce que** la quantité du noir de carbone est de 1 à 20 % en poids, en particulier de 2 à 15 % en poids, par rapport au poids de la composition de primage.

9. Composition de primage selon l'une quelconque des revendications précédentes, **caractérisée en ce qu'**une proportion du polyisocyanate **B** est remplacée de façon stoechiométrique par au moins un polyisocyanate **B'** et/ou par au moins un polyisocyanate **B''** et/ou par au moins un polyisocyanate **B''',** où le polyisocyanate **B'** est un isocyanurate de diisocyanate d'hexaméthylène et le polyisocyanate **B''** est un polyisocyanate aromatique à base de diisocyanate de toluylène, et le polyisocyanate **B'''** est un polyisocyanate oligomère de diisocyanate de 1,6-hexaméthylène (HDI), de diisocyanate de diphénylméthane (MDI), de diisocyanate d'isophorone (IPDI) et/ou de diisocyanate de toluylène (TDI) ou un polyméthylène-polyphénylisocyanate.

10. Composition de primage selon l'une quelconque des revendications précédentes, **caractérisée en ce que** la proportion du liant qui est préparé à partir d'un mélange de la résine de polyester **A** et d'au moins un polyisocyanate **B** est de 10 à 50 % en poids, en particulier de 15 à 30 % en poids, par rapport au poids de la composition de primage.

11. Utilisation d'une composition de primage selon l'une quelconque des revendications 1 à 10 en tant que couche de primage pour l'amélioration de l'adhésion d'adhésifs ou de matières d'étanchéité à des surfaces enduites.

12. Utilisation d'une composition de primage selon l'une quelconque des revendications 1 à 10 en tant que couche de primage pour l'amélioration de l'adhésion d'adhésifs ou de matières d'étanchéité à des matières synthétiques, en particulier à des copolymères d'acrylonitrile-butadiène-styrène (ABS) ou du polyméthacrylate de méthyle (PMMA).

13. Procédé de collage ou d'étanchéification comprenant les étapes consistant à
a) appliquer une composition de primage selon l'une quelconque des revendications 1 à 10 sur un premier substrat **S1** destiné à être collé ou étanchéifié,
b) appliquer un adhésif ou une matière d'étanchéité sur la composition de primage à évacuation d'air, qui se trouve sur le substrat **S1,**
c) mettre en contact l'adhésif ou la matière d'étanchéité avec un deuxième substrat **S2 ;**
ou
a') appliquer une composition de primage selon l'une quelconque des revendications 1 à 10 sur un premier substrat **S1** destiné à être collé ou étanchéifié,
b') appliquer un adhésif ou une matière d'étanchéité sur la surface d'un deuxième substrat **S2,** qui est composé du même matériau ou d'un matériau différent de celui du substrat **S1,**
c') mettre en contact l'adhésif ou la matière d'étanchéité avec la composition de primage à évacuation d'air, qui se trouve sur le substrat **S1 ;**
ou
a'') appliquer une composition de primage selon l'une quelconque des revendications 1 à 10 sur un premier substrat **S1** destiné à être collé ou étanchéifié,
b'') évacuer l'air de la composition de primage,
c'') appliquer un adhésif ou une matière d'étanchéité entre les surfaces des substrats **S1** et **S2,**
où le deuxième substrat **S2** est composé du même matériau ou d'un matériau différent de celui du premier substrat **S1.**

14. Procédé selon la revendication 13, **caractérisé en ce que** l'étape c) ou c') ou c'') est suivie d'une étape d) de durcissement de l'adhésif ou de la matière d'étanchéité.

15. Procédé selon la revendication 13 ou 14, **caractérisé en ce que** l'adhésif ou la matière d'étanchéité est un adhésif ou une matière d'étanchéité de polyuréthane à un composant, durcissant à l'humidité.

16. Procédé selon l'une quelconque des revendications 13 à 15, **caractérisé en ce que** le substrat **S1** est un enduit, en particulier un métal enduit.

17. Article collé ou étanchéifié, qui a été obtenu par un procédé selon l'une quelconque des revendications 13 à 16.

18. Article collé ou étanchéifié selon la revendication 17, **caractérisé en ce que** l'article est un moyen de transport, en particulier une automobile, ou une pièce de construction d'un moyen de transport, en particulier d'une automobile.
